# EUROPEAN PATENT APPLICATION

(11) **EP 3 493 039 A1**
(43) Date of publication of application: **05.06.2019**
(21) Application number: 18209867.3
(22) Date of filing: 03.12.2018
(51) Int. Cl.: G06F 3/048, G06F 3/0488, G06F 3/0489, G06F 3/023, H04N 5/44, H04N 21/422, H04N 21/431

(54) **ELECTRONIC APPARATUS, CONTROL METHOD THEREOF, AND COMPUTER READABLE RECORDING MEDIUM**

(30) Priority: 04.12.2017 KR 20170165220
(71) Applicant: Samsung Electronics Co., Ltd., Suwon-si, Gyeonggi-do, 16677 (KR)
(72) Inventor: KIM, Hyungrae, 16677 Gyeonggi-do (KR)
(74) Representative: Walaski, Jan Filip

(57) **Abstract**

An electronic apparatus is provided. The electronic apparatus includes a communicator comprising communication circuitry configured to receive a control signal from a remote controller; and a processor configured to determine at least one recommendation key based on a screen corresponding to an image signal and key input history information and to generate a keypad image including a button object in which the at least one recommendation key is arranged to be selectable by a plurality of buttons included in the remote controller.

## Description

The present disclosure relates generally to an electronic apparatus, a control method thereof, and a computer readable recording medium, and, for example, to an electronic apparatus for providing a virtual keypad, a control method thereof, and a computer readable recording medium.

Various types of electronic products are developed and distributed owing to the development of electronic technology. In particular, various electronic apparatuses such as TVs, mobile phones, PCs, notebook PCs, PDAs, set-top boxes, etc. are used in most households.

As the use of electronic apparatuses has increased, user needs for more diverse functions have also increased. Accordingly, the effort of each manufacturer to meet the user needs has increased, and products with new functions that have not been available in the past are emerging.

Recently, electronic apparatuses such as a smart TV, which perform various interactions with users, have become popular. However, there are limitations in inputting control commands with limited buttons such as a button provided in an electronic apparatus and a button provided in a remote controller. To solve this problem, a technology of displaying a virtual keypad including various control keys on a display was introduced.

However, when a user wants to input a desired control key on the virtual keypad, an additional operation is required to move the key to a position where the key is located, thus wasting time and inconveniencing the user.

Example embodiments of the present disclosure address the above disadvantages and other disadvantages not described above.

The present disclosure provides an electronic apparatus for providing a virtual keypad for an efficient input with a limited number of keys available for an operation input, a control method thereof, and a computer readable recording medium.

According to an example aspect of the present disclosure, an electronic apparatus includes a communicator comprising communication circuitry configured to receive a control signal from a remote controller; and a processor configured to determine at least one recommendation key based on a screen corresponding to an image signal and key input history information and to generate a keypad image including a button object in which the at least one recommendation key is arranged to be selectable by a plurality of buttons included in the remote controller.

In response to button information being received from the remote controller, the processor may be further configured to: identify a first key corresponding to the received button information, identify a second key to be input after the first key, and change the button object to include the second key.

The processor may be further configured to identify the second key using machine learning.

The communicator may be further configured to receive the image signal from an external apparatus, and the processor may be further configured to identify a predetermined object on a screen corresponding to the received image signal, and to generate a keypad image including a virtual keypad object corresponding to the identified object among a plurality of virtual keypad objects.

The electronic apparatus may further include a memory storing key input history information, and the processor may be further configured to obtain the key input history information for each of the predetermined object, and to store the key input history information obtained for each of the predetermined object in the memory.

In response to button information input in a remote controller being received from the remote controller, the processor may be further configured to identify a second key to be input after the first key corresponding to the received button information, and to rearrange a plurality of key areas included in the virtual keypad object such that the second key is included in the button object.

The processor may be further configured to rearrange the plurality of key areas included in the virtual keypad object such that the second key is positioned at a same position as a position of the first key in the button object.

The button object may be in the form of 4 direction keys and/or number keys provided in the remote controller.

The electronic apparatus may further include a display configured to display the generated keypad image.

The communicator may be further configured to transmit the generated keypad image to an external display apparatus.

According to another example aspect of the present disclosure, a control method of an electronic apparatus includes determining at least one recommendation key based on a screen corresponding to an image signal and key input history information; and generating a keypad image including a button object in which the at least one recommendation key is arranged to be selectable by a plurality of buttons included in a remote controller.

In response to button information received from the remote controller, the determining may include identifying a first key corresponding to the received button information, and identifying a second key to be input after the first key, and the generating may include changing the button object to include the second key and generating a keypad image including the changed button object.

The determining may include identifying the second key using machine learning.

The control method may further include receiving the image signal from an external apparatus, and the generating may include identifying a predetermined object on a screen corresponding to the received image signal, and generating a keypad image including a virtual keypad object corresponding to the identified object among a plurality of virtual keypad objects.

The control method may further include obtaining the key input history information for each of the predetermined object, and storing the key input history information obtained for each of the predetermined object in the memory.

In response to button information input in a remote controller being received from the remote controller, the determining may include identifying a second key to be input after the first key corresponding to the received button information, and the generating may include rearranging a plurality of key areas included in the virtual keypad object such that the second key is included in the button object.

The generating may include rearranging the plurality of key areas included in the virtual keypad object such that the second key is positioned at a same position as a position of the first key in the button object.

The button object may be in the form of 4 direction keys and/or number keys provided in the remote controller.

The control method may further include displaying the generated keypad image.

According to another example aspect of the present disclosure, a computer-readable recording medium may have recorded thereon a program for executing a control method of an electronic apparatus, wherein the control method includes: determining at least one recommendation key based on a screen corresponding to an image signal and key input history information; and generating a keypad image including a button object in which the at least one recommendation key is arranged to be selectable by a plurality of buttons included in a remote controller.

Additional and/or other aspects and advantages of the disclosure will be set forth in part in the description which follows and, in part, will be apparent from the description.

The above and/or other aspects, features and attendant advantages of the present disclosure will be more readily apparent from the following detailed description, taken in conjunction with the accompanying drawings, in which like reference numerals refer to like elements, and wherein:
FIG. 1 is a diagram illustrating an electronic apparatus control system according to an example embodiment of the present disclosure;
FIG. 2 is a block diagram illustrating an example configuration of an electronic apparatus according to an example embodiment of the present disclosure;
FIG. 3 is a block diagram illustrating an example configuration of the electronic apparatus of FIG. 2;
FIGS. 4A, 4B and 4C are diagrams illustrating various example embodiments of a virtual keypad image according to an example embodiment;
FIGS. 5A, 5B, 5C, 6, 7, 8A, 8B and 9 are diagrams illustrating various example embodiments of a virtual keypad image according to an example embodiment;
FIG. 10 is a diagram illustrating a method of collecting in key input history information according to an example embodiment;
FIG. 11 is a flowchart illustrating an example control method of an electronic apparatus according to an example embodiment; and
FIG. 12 is a flowchart illustrating an example control method of an electronic apparatus according to an example embodiment.

The terms used in this disclosure will be briefly described, and the present disclosure will be described in greater detail below.

Although general terms used in the present disclosure and claims are selected to describe example embodiments in consideration of the functions thereof, these general terms may vary according to intentions of one of ordinary skill in the art, legal or technical interpretation, the advent of new technologies, and the like. Some terms may be arbitrarily selected. In this case, their meanings are given or may be gleaned from the detailed description. Hence, these terms may be defined based on their meanings and the contents of the disclosure, not by simply stating the terms.

As the disclosure allows for various changes and numerous embodiments, example embodiments will be illustrated in the drawings and described in detail in the disclosure. However, this is not intended to limit the present disclosure to particular modes of practice, and it is to be appreciated that all changes, equivalents, and substitutes that do not depart from the spirit and technical scope of the present disclosure are encompassed in the present disclosure. In the present disclosure, certain detailed explanations of the related art may be omitted where it is deemed that they may unnecessarily obscure the essence of the disclosure.

While such terms as "first," "second," etc., may be used to describe various components, such components must not be limited to the above terms. The above terms are used only to distinguish one component from another.

As used herein, the singular forms "a", "an" and "the" include plural referents unless the context clearly dictates otherwise. In the present disclosure, the terms "include" or "configured" and the like, specify the presence of a feature, a number, a step, an operation, a component, parts, or a combination thereof but do not preclude the presence or addition of one or more features, numbers, steps, operations, components, parts, or combinations thereof.

In the various example embodiments of the present disclosure, the terms such as "module," "unit," "part," and the like are terms for designating a component that performs at least one function or operation. The component may be implemented as hardware, software, or any combination of hardware and software. A plurality of "modules", "units", "parts", etc. may be integrated into at least one module or chip and implemented as at least one processor, excluding the case where each is necessarily implemented as individual specific hardware.

Hereinafter, the present disclosure will be described in greater detail with reference to the accompanying drawings, in which example embodiments of the disclosure are illustrated. The disclosure may, however, be embodied in many different forms and should not be understood to be limited to the example embodiments set forth herein; rather these example embodiments are provided so that this disclosure will be thorough and complete, and will convey the concept of the disclosure to one of ordinary skill in the art. In the drawings, like reference numerals denote like elements. Also, while describing the present disclosure, detailed descriptions about related well known functions or configurations that may obscure the points of the present disclosure may be omitted.

Hereinafter, various example embodiments of the present disclosure will be described in greater detail with reference to the accompanying drawings.

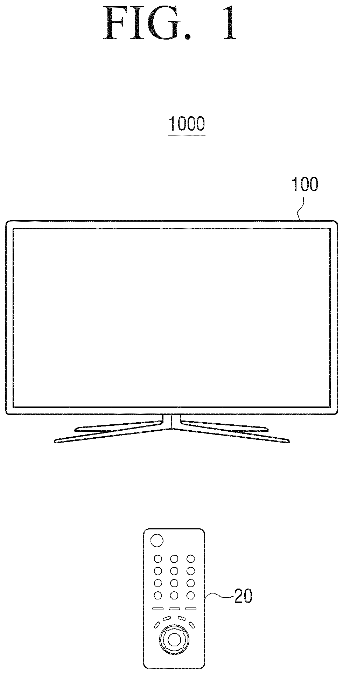

FIG. 1 is a diagram illustrating an electronic apparatus control system according to an example embodiment of the present disclosure.

Referring to FIG. 1, an electronic apparatus control system 1000 according to an example embodiment of the present disclosure may include, for example, and without limitation, an electronic apparatus 100 and a remote controller 20.

The electronic apparatus 100 may process content. For example, the electronic apparatus 100 may process content input from an external input source or previously stored content. Here, the electronic apparatus 100 may include, for example, and without limitation, various devices having a display such as a TV, a mobile phone, a smart phone, a PDA, a notebook PC, a monitor, a tablet PC, an electronic book, an electronic photo frame, a kiosk, or the like. In this case, the electronic apparatus 100 may display the processed content. On the other hand, the electronic apparatus 100 include a variety of devices having no display such as, for example, and without limitation, a server, a set-top box, or the like. In this case, the electronic apparatus 100 may transmit the processed content to an external apparatus having the display.

The electronic apparatus 100 may receive an operation command. For example, the electronic apparatus 100 may receive various control commands from the remote controller 20. Although it is described in the present disclosure that the operation command of a user is received from the remote controller 20, the operation command may be received through any suitable input means such as, for example, and without limitation, a button provided in the electronic apparatus 100 and/or a touch screen.

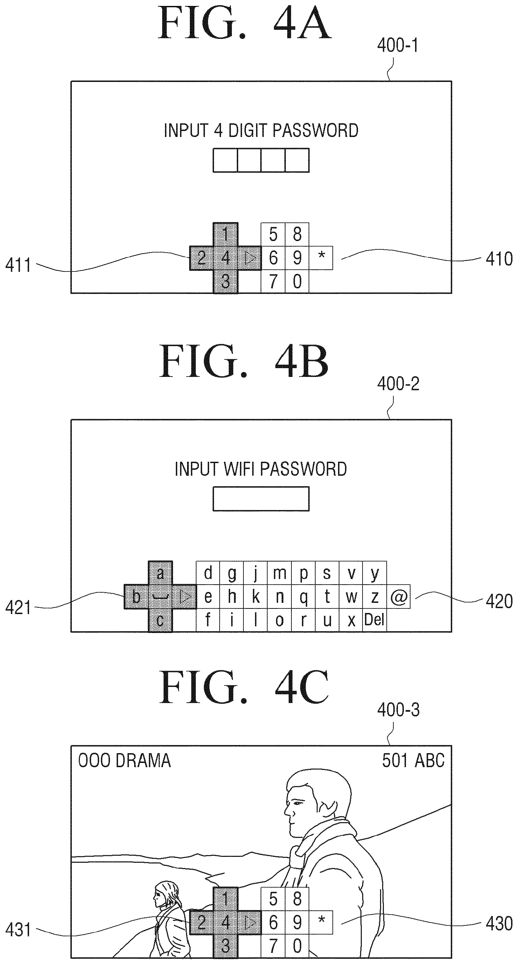

The electronic apparatus 100 may process the content such that a virtual keypad is provided together with a screen provided to the user. For example, even if the remote controller 20 including limited physical buttons such as direction keys and numeric keys is used, a virtual keypad image may be generated to provide more efficient control, and the virtual keypad image may be displayed together when the content is displayed. The electronic apparatus 100 may, for example, display the virtual keypad image by merging the virtual keypad image into an image signal or may display the virtual keypad image in an OSD format. The electronic apparatus 100 may generate another virtual keypad image according to a screen corresponding to the image signal received from the external apparatus. The electronic apparatus 100 may generate the virtual keypad image using key input history information of the user. An operation of generating another keypad image according to the screen corresponding to the image signal will be described in greater detail below with reference to FIG. 4.

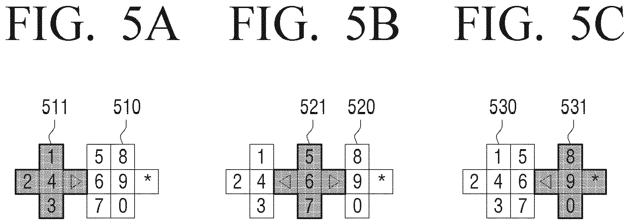

When the operation command of the user for the displayed virtual keypad image is input through the remote controller 20, the electronic apparatus 100 may predict (identify or determine) a key to be input next by the user, and may generate the virtual keypad image again according to a prediction result. The virtual keypad image which changes according to a user's key input through the remote controller 20 will be described in greater detail below with reference to FIGS. 5A, 5B, 5C, 6, 7, 8A, 8B and 9.

In the above description, although it is described that all the operations described above are performed by one electronic apparatus, a plurality of electronic apparatuses may divide and perform some operations when actually implemented. For example, some of the plurality of operations described above may be performed by a server or a set-top box, and the other operations may be performed by a display apparatus.

On the other hand, the remote controller 20 may receive an operation command for the electronic apparatus 100 from the user. The remote controller 20 may be a dedicated device for performing only the operation of the electronic apparatus 100, and the remote controller 20 may transmit the operation command input from the user to the electronic apparatus 100.

The remote controller 20 may transmit the operation command in a unidirectional and/or bidirectional wireless communication method. For example, the remote controller 20 may have a plurality of keys, such as, for example, and without limitation, direction keys and/or numeric keys, and may transmit a control command corresponding to a key selected by the user to the electronic apparatus 100. The control command may include, for example, and without limitation, channel up/down for a channel selection, sound up/down, a channel number, a character key, a movement command of a cursor (a direction key), an execution command of a selected item, and the like. Here, the movement command (or a selection of a direction key) of the cursor may be used to select a key in the virtual keypad image.

As described above, the electronic apparatus control system 1000 according to the present disclosure may generate the virtual keypad image based on the image signal and the key input history information, and thus the user may use the remote controller 20 having the limited key to control the electronic apparatus 100 more efficiently.

Although the electronic apparatus 100 has been illustrated and described as being directly connected (e.g., coupled) to the remote controller 20 in the above description, the electronic apparatus 100 and the remote controller 20 may be connected through a relay device such as a router when implemented. Although the electronic apparatus 100 is illustrated as being connected to the one remote controller 20 in the diagram, the electronic apparatus 100 may be connected to a plurality of remote controls, and conversely, the remote controller 20 may also be connected to a plurality of display apparatuses.

In the above description, although the electronic apparatus 100 has been described as receiving an operation command through the remote controller 20, when implemented, the electronic apparatus 100 may receive the operation command through a touch screen and/or a button owned by the electronic apparatus 100.

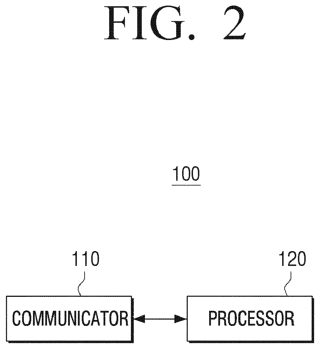

FIG. 2 is a block diagram illustrating an example configuration of an electronic apparatus according to an example embodiment of the present disclosure.

Referring to FIG. 2, an electronic apparatus 100 may include a communicator (e.g., including communication circuitry) 110 and a processor (e.g., including processing circuitry) 120.

The communicator 110 may include various communication circuitry and receive a control signal for controlling the electronic apparatus 100 from a remote controller. For example, the communicator 110 may include various communication circuitry, such as, for example, and without limitation, a near field communication module including near field communication circuitry for performing near field communication with the remote controller, or the like. In an example embodiment of the present disclosure, near field communication may include, for example, and without limitation, various standards such as Wi-Fi, Bluetooth, Zigbee, IrDA communication, or the like. The control signal may, for example, be information about a key operated by a user in the remote controller.

The communicator 110 may receive an image signal from an external apparatus. For example, and without limitation, the communicator 110 may receive the image signal from a server, a set top box, an external memory apparatus, or the like, which is the external apparatus.

The communicator 110 may transmit information about a virtual keypad image generated by the processor 120 to the external apparatus such that the virtual keypad image is displayed on the external apparatus.

The processor 120 may include various processing circuitry and determine at least one recommendation key in consideration of (based on) a screen corresponding to the image signal and key input history information and may generate a keypad image including a button object in which the recommendation key is arranged. The screen may be a screen corresponding to the image signal received according to the control signal received from the remote controller.

The processor 120 may generate a virtual keypad image including a virtual keypad object and a button object located in a partial region of the virtual keypad object.

The virtual keypad image may, for example, be an image to be displayed together with the screen corresponding to the received image signal. The user may select a desired key on the displayed virtual keypad image using the button provided in the remote controller.

The virtual keypad object may refer, for example, to an image of a key set in which a plurality of inputable keys, such as, for example, and without limitation, a QWERTY keypad, a numeric keypad, a Cheonjiin keypad, a keypad based on an alphabetical order, a Korean keypad, or the like, classified according to a specific reference.

The user may select the desired key on the virtual keypad image using a button object representing a plurality of key regions selectable by a plurality of buttons provided in the remote controller. For example, the user may view a button object highlighted in the form of a button set provided in the remote controller on the virtual keypad object, as shown in FIGS. 4 to 9, if there is a key to be input to the button object, operate the corresponding button, and if there is no key to input in the button object, move the button object. The button object may, for example, and without limitation, be in the form of a four direction key and/or a number key, like the form of the button set provided in the remote controller.

In the above description, although only the virtual keypad image including the button object has been described to be generated in a partial region of the virtual keypad object, when a predetermined event occurs, the processor 120 may display only a button object having the form of the button set provided in the remote controller without the virtual keypad object when actually implemented. The predetermined event may refer, for example, to a situation in which the control signal input from the remote controller is received. At least one key displayed on the button object may be at least one key recommended based on the screen corresponding to the image signal received from the external apparatus and the key input history information as the control signal is received.

The processor 120 may select a virtual keypad object corresponding to a type of the screen from among a plurality of virtual keypad objects according to a type of the screen displayed according to the control signal received from the remote controller. The processor 120 may determine the type of the screen using information included in the control signal or information included in the image signal.

The processor 120 may analyze the screen corresponding to the received image signal and generate the virtual keypad image corresponding to the screen. The processor 120 may detect (identify or determine) a predetermined object on the screen corresponding to the received image signal, and may select a virtual keypad object corresponding to the detected object among the plurality of virtual keypad objects. An example embodiment in this regard will be described in greater detail below with reference to FIG. 4.

The predetermined object may be used to determine the type of the screen corresponding to the received image signal. The processor 120 may detect the predetermined object by performing an ACR (Automatic Contents Recognition) and/or an OCR (Optical Character Reader) on the screen corresponding to the received image signal. ACR or OCR is a general technology understood by those skilled in the art, and a detailed description thereof is not necessary.

The predetermined object may, for example, and without limitation, be a word, an icon, a thumbnail, or the like, described on the screen. For example, if an in-screen image, a channel number, a program name, a broadcast time, a broadcasting company logo, a banner, a genre, and the like are included, the processor 120 may determine that the received image signal is a general broadcast image. The processor 120 may use metadata of the received broadcast signal to determine that a number or a character recognized in the screen is the image, the channel number, the program name, and the broadcast time. On the other hand, if a screen recognition result includes a 'Wi-Fi', a 'password', or the like, in the screen, the processor 120 may determine that the received image signal is a screen for inputting a Wi-Fi password.

The processor 120 may select one of a plurality of virtual keypad objects according to the screen recognition result. The processor 120 may analyze the screen corresponding to the received image signal, and if the predetermined object is detected in the screen, select one virtual keypad object corresponding to the detected predetermined object among the plurality of virtual keypad objects. The virtual keyboard object corresponding to the predetermined object may be previously stored at the time of shipment, and may be updated through learning according to a use history of the user.

If the user selects one of a plurality of keys in the button object using the button provided in the remote controller, the processor 120 may predict a key to be selected next to the selected key. The processor 120 may perform an operation corresponding to the key selected by the user, and predict the key to be selected in the following order by the user. An operation corresponding to the key selected by the user and an operation of predicting the key to be selected may be performed simultaneously, and are not limited to any particular order.

The processor 120 may predict the key to be selected in the following order using the key input history information of the user. The key input history information may be information obtained by accumulating the number of times of input of the key selected by the user using the remote controller, the input order, and the like. On the other hand, the key input history information may be collected (obtained) for each displayed screen. This may refer, for example, to a situation in which key input history information is collected for each predetermined object included in the screen.

The processor 120 may then regenerate the virtual keypad image again such that the predicted key is included in the button object. The processor 120 may maintain a key arrangement of the virtual keypad object including a plurality of key regions when predicting a key to be input next after the user inputs a button, and generate the virtual keypad image in which a position of the button object is moved on the virtual keypad object such that the button object includes the predicted key. An example embodiment in this regard will be described in greater detail below with reference to FIGS. 5A, 5B and 5C.

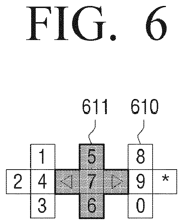

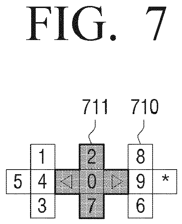

The processor 120 may generate the virtual keypad image by rearranging the plurality of key regions of the virtual keypad object while maintaining the position of the button object on the virtual keypad object. The processor 120 may rearrange the plurality of key regions constituting the virtual keypad such that a predicted key region is positioned at the same position as the button of the remote controller operated by the user. An example embodiment in this regard will be described in greater detail below with reference to FIGS. 6 and 7.

The screen recognition and prediction operations of the processor 120 may, for example, and without limitation, be implemented in an artificial intelligence (AI) system and its application using a machine learning algorithm.

The AI system may, for example, be a computer system that implements human-level intelligence, and is a system in which machine learns and determines itself and a recognition rate improves as it is used. AI technology may include machine learning (deep learning) technology using an algorithm which classifies/learns features of input data itself and element technologies which simulate functions such as recognition and determination of human brain using machine learning algorithm.

Element technologies may include at least one of, for example, and without limitation, a linguistic comprehension technology for recognizing human language/characters, a visual comprehension technology for recognizing objects as human vision, a reasoning/prediction technology for determining and logically reasoning and predicting the information, a knowledge expression technology for processing human experience information as knowledge data, and an operation control technique for controlling an autonomous running of a vehicle and a motion of a robot.

Image recognition technology, visual understanding may, for example, include a technology for recognizing and processing objects as human vision, including object recognition, object tracking, image search, human recognition, scene understanding, spatial understanding, image enhancement, or the like.

Inference prediction may, for example, include a technology for determining and logically reasoning and predicting information, including knowledge/probability based reasoning, optimization prediction, preference base planning, recommendation, and the like.

Knowledge representation may, for example, include a technology for automating human experience information into knowledge data, including knowledge building (data generation/classification) and knowledge management (data utilization).

As described above, by generating the virtual keypad image based on the screen corresponding to the received image signal and the key input history information of the user, even if the user uses the remote controller having limited button inputs, control may be performed by operating the limited buttons, and thus the convenience of the user may be improved.

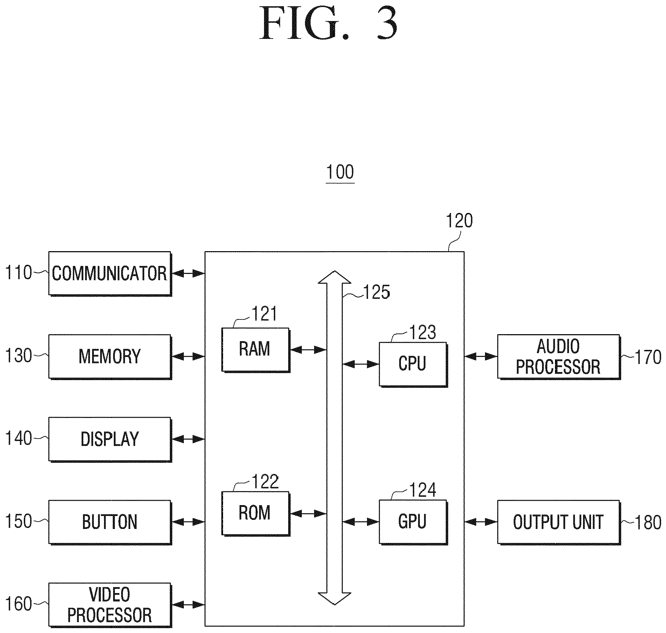

FIG. 3 is a block diagram illustrating an example configuration of the electronic apparatus 100 of FIG. 2.

Referring to FIG. 3, the electronic apparatus 100 may include the communicator (e.g., including communication circuitry) 110, the processor (e.g., including processing circuitry) 120, a memory 130, a display 140, a button 150, a video processor (e.g., including video processing circuitry) 160, an audio processor (e.g., including audio processing circuitry) 170, and an output unit (e.g., including output circuitry) 180.

The communicator 110 may be the same as, or similar to, that shown in FIG. 2, and a redundant description will not be repeated here.

The memory 130 may store various programs and data necessary for an operation of the electronic apparatus 100. For example, the memory 130 may store parameters for image processing of an input image.

The memory 130 may store a plurality of virtual keypad objects for generating a virtual keypad image. At this time, the virtual keypad object may include at least one of a Korean key, a numeric key, and a set of English keys.

The memory 130 may match and store a type of a screen and the virtual keypad object. For example, the type of the screen may be determined according to a predetermined object included in the screen, and thus the memory 130 may match and store the predetermined object and the virtual keypad object.

The memory 130 may store key input history information. At this time, the key input history information may be information of a button itself operated by a user through a remote controller, and when the user operates the button based on the virtual keypad, the user may store information about a selected key on the virtual keypad image.

The key input history information stored in the memory 130 may be classified and accumulated according to the type of the screen. For example, the key input history information may be collected according to the type of the screen at the time when the user inputs an operation command. The type of the screen may be classified according to a type of the predetermined object detected through a screen recognition operation.

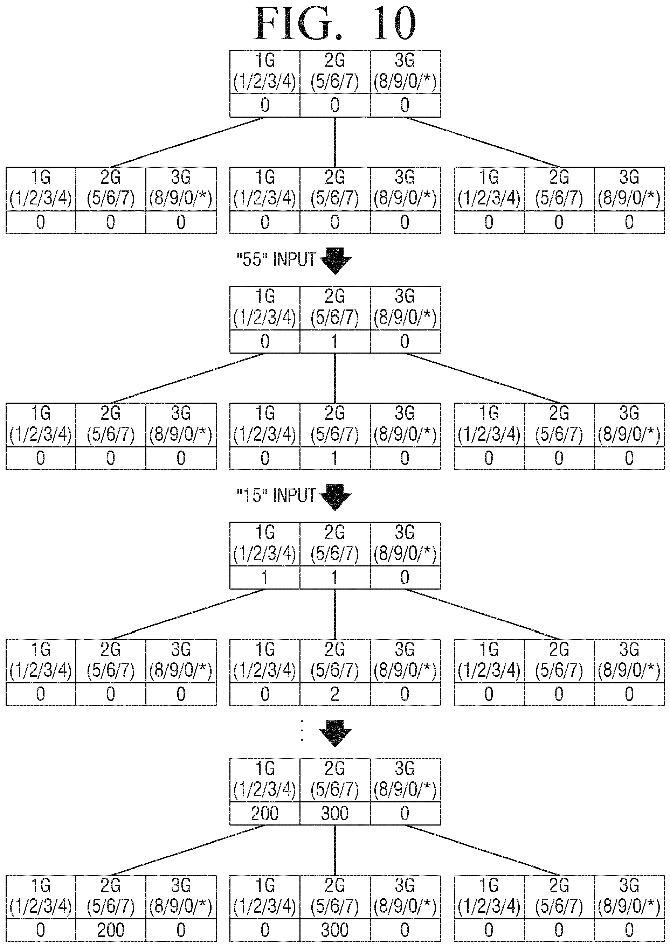

For example, the key input history information stored in the memory 130 may include the number of times of input to the key itself according to the type of the screen, but is not limited thereto. A key input order may be reflected. Such a collection of the key input history information will be described in greater detail below with reference to FIG. 10.

The display 140 may display a screen corresponding to an image signal received under the control of the processor 120. The display 140 may display the virtual keypad image generated based on the screen corresponding to the image signal input under the control of the processor 120 and the input image signal. The display 140 may be implemented as various types of displays such as, for example, and without limitation, a liquid crystal display (LCD), an organic light emitting diode (OLED) display, a plasma display panel (PDP), or the like. The display 140 may also include a driving circuit, a backlight unit, etc., which may be implemented in the form of an a-si TFT, a low temperature poly silicon (LTPS) TFT, an OTFT (organic TFT), etc. The display 140 may also be implemented as a flexible display.

The display 140 may include, for example, and without limitation, a touch sensor for sensing a user's touch gesture. The touch sensor may be implemented as various types of sensors such as capacitive, resistive, piezoelectric, and the like. The capacitive type is a method of measuring touch coordinates by sensing minute electricity that is excited by the user's body when a part of the user's body is touched to a surface of the display 140 by using a dielectric coated on the surface of the display 140. The resistive type is a method of measuring touch coordinates by including two electrode plates built in the display 140 and sensing current flowing when the user touches the screen and upper and lower plates of a touched point are in contact. In addition, when the electronic apparatus 100 also supports a pen input function, the display 140 may sense a user gesture using an input means such as a pen in addition to the user's finger. If the input means includes a stylus pen including a coil therein, the electronic apparatus 100 may include a magnetic field sensing sensor capable of sensing a magnetic field that is varied by a coil inside the stylus pen. Accordingly, not only the touch gesture but also proximity gesture, e.g., hovering, may be sensed.

In the above description, although the display function and the gesture sensing function have been described as being performed by the same configuration, they may be performed by different configurations. According to various example embodiments, the display 140 may not be provided in the electronic apparatus 100.

The processor 120 may include various processing circuitry and control the display 140 to change and display the screen corresponding to the received image signal when a control signal of the user using the remote controller is inputted through the communicator 110.

For example, when the control signal input by the user is a channel change, a volume change, a content execution, or the like, the processor 120 may perform an operation corresponding to the control signal. On the other hand, if the control signal input by the user is an operation for inputting characters, the processor 120 may control the display 140 to generate a virtual keypad image and display the virtual keypad image together with the screen corresponding to the received image signal.

For example, when the user enters a screen requiring a character input, the processor 130 may select an appropriate virtual keypad object through screen analysis and display the virtual keypad object on the screen. For example, in the case of a screen having ID and password input areas for login, the processor 120 may control the display 140 to generate a virtual keypad image including a virtual keypad object in which alphabet and numbers are mixed and display the virtual keypad image on the screen. On the other hand, when there is a four-digit password input area or a general broadcast screen, the processor 120 may control the display 140 to generate a virtual keypad image including a virtual keypad object having numbers and display the virtual keypad image on the screen.

The processor 120 may predict a key to be input by the user using the key input history information stored in the memory 130 as well as the screen corresponding to the received image signal. For example, when the user operates a button provided in the remote controller and selects one key on the virtual keypad object, the processor 120 may use the key input history information collected according to a type of the screen to predict a key that a user is highly likely to input next.

The processor 120 may generate a modified virtual keypad image that moves the button object on the virtual keypad object to include the predicted key. The processor 120 may control the display 140 to display the newly generated virtual keypad image with the screen. As described above, the processor 120 may control the display 140 to change and display the virtual keypad image each time the user presses one of buttons provided in the remote controller while the virtual keypad image is displayed.

The processor 120 may change a position of the button object of the virtual keypad image and may rearrange a plurality of keys constituting the virtual keypad object while maintaining the position of the button object. When reordering the plurality of keys, the processor 120 may generate the virtual keypad image such that a position of the key selected by the user is the same as a position of the predicted key.

The processor 120 may include a RAM 121, a ROM 122, a CPU 123, a GPU (Graphic Processing Unit) 124, and a bus 125. The RAM 121, the ROM 122, the CPU 123, the GPU 124, and the like may be connected to each other or communicate with each other via the bus 125.

The CPU 123 may access the memory 130 and perform booting using an O/S stored in the memory 130. The CPU 123 may perform various operations using various programs, contents, data, and the like stored in the memory 130.

The ROM 122 may store a command set for booting the system and the like. When a turn-on command is input and power is supplied, the CPU 123 may copy the O/S stored in the memory 130 to the RAM 121 according to the command stored in the ROM 122 and execute the O/S to boot the system. When booting is completed, the CPU 123 may copy various programs stored in the memory 130 to the RAM 121, execute the program copied to the RAM 121, and perform various operations.

The GPU 124 may display a UI on the display 140 when booting of the electronic apparatus 100 is completed. Specifically, the GPU 124 may generate a screen including various objects such as an icon, an image such as a virtual keypad image, text, and the like using an operation unit (not shown) and a rendering unit (not shown). The operation unit may calculate attribute values such as coordinate values, shapes, sizes, and colors by which the respective objects are to be displayed according to a layout of the screen. The rendering unit may generate screens of various layouts including objects based on the attribute values calculated by the operation unit. The screen (or a user interface window) generated by the rendering unit may be provided to the display 140, and displayed on each of a main display area and a sub display area.

The buttons 150 may be various types of buttons such as, for example, and without limitation, mechanical buttons, touch pads, wheels, and the like, formed in any area such as a front part, a side part, or a back part of a main body of the electronic apparatus 100,

The video processor 160 may include various processing circuitry and be a component for processing contents received through the communicator 110 and/or video data included in the contents stored in the memory 130. The video processor 160 may perform various image processing such as decoding, scaling, noise filtering, frame rate conversion, resolution conversion, and the like on the video data.

The audio processor 170 may include various audio processing circuitry and be a component for processing the contents received through the communicator 110 and/or audio data included in the contents stored in the memory 130. The audio processor 170 may perform various processes such as decoding or amplification, noise filtering, and the like on the audio data.

When a playback application for multimedia contents is executed, the processor 120 may drive the video processor 160 and the audio processor 170 to play the corresponding content. The display 140 may display an image frame generated by the video processor 160 on at least one of the main display region and the sub display region.

The audio output unit 180 may include various audio output circuitry and output the audio data generated by the audio processor 170.

In addition, although not shown in FIG. 3, according to example embodiments, the electronic apparatus 100 may further include a USB port to which a USB connector may be connected, various external input ports for connecting to various external terminals such as a headset, a mouse, a LAN, etc., a DMB (Digital Multimedia Broadcasting) chip for receiving and processing a DMB signal, a variety of sensors, a microphone for receiving sound, a camera for capturing a still image or a moving image, etc.

FIGS. 4A, 4B and 4C are diagrams illustrating various example embodiments of a virtual keypad according to a screen. Specifically, FIGS. 4A, 4B and 4C are diagrams illustrating an example embodiment in which a different virtual keypad is displayed according to a type of a screen corresponding to an image signal received by an electronic apparatus.

FIG. 4A shows a first screen 400-1 for inputting a password including numbers, FIG. 4B shows a second screen 400-2 for inputting a password including characters, and FIG. 4C shows a third screen 400-3 for displaying a general broadcast image.

When the electronic apparatus enters the first screen 400-1 for inputting the password including numbers as shown in FIG. 4A according to a control signal received from a remote controller, the electronic apparatus may analyze the first screen 400-1 to detect a predetermined object. The object detected in the first screen 400-1 may, for example, be 'password', 'four digits', an input area, or the like. The electronic apparatus may recognize that the first screen 400-1 is a screen for inputting the password including numbers based on the detected object and generate a virtual keypad image 410 including a virtual keypad object including numbers. The virtual keypad image 410 may include a button object 411 that may be selected using a plurality of buttons of the remote controller.

On the other hand, when the electronic apparatus enters the second screen 400-2 for inputting the password including characters as shown in FIG. 4B according to a control signal received from the remote controller, the electronic apparatus may analyze the second screen 400-2 to detect a predetermined object. The object detected in the second screen 400-2 may, for example, be 'password', 'Wi-Fi', and an input area. The electronic apparatus may recognize that the second screen 400-2 is a screen for inputting the password including characters based on the detected object and generate a virtual keypad image 420 including a virtual keypad object including characters. The virtual keypad image 420 may include a button object 421 that may be selected using the plurality of buttons of the remote controller. Although FIG. 4B shows a virtual keypad object including only of characters for convenience of explanation, when actually implemented, a virtual keypad image including a virtual keypad object in which characters and numbers are mixed may be generated.

On the other hand, when the electronic apparatus enters the third screen 400-3 for inputting the password including numbers as shown in FIG. 4C according to a control signal received from the remote controller, the electronic apparatus may analyze the third screen 400-3 to detect a predetermined object. The object detected in the third screen 400-3 may be a channel number, a channel name, a program name, and the like. The electronic apparatus may recognize that the third screen 400-3 is a screen for broadcasting a general broadcast program based on the detected object and may generate a virtual keypad image 430 including a virtual keypad object including numbers. At this time, the virtual keypad image 430 may include a button object 431 that may be selected using the plurality of buttons of the remote controller. Although FIG. 4C shows a virtual keypad object including only numerals for convenience of explanation, when actually implemented, a virtual keypad image including a virtual keypad object in which characters and numbers are mixed, a menu button, a recording button, or the like, that are generally used when watching TV may be generated.

The electronic apparatus may display the generated virtual keypad images 410, 420, and 430 on the screens 400-1, 400-2, and 400-3, respectively. When the user inputs one of a plurality of keys included in the button objects 411, 421, and 431 using the buttons of the remote controller, the electronic apparatus may predict a key that the user is highly likely to input next using a type of the screen corresponding to the received image signal and key input history information, and change the virtual keypad image to include the predicted key. The electronic apparatus may change the virtual keypad image by moving the button object on the virtual keypad images 410, 420, and 430, or rearranging a plurality of key areas included in the virtual keypad object.

The virtual keypad image may be generated using the screen corresponding to the received image signal and the key input history information as described above, and thus the electronic apparatus may be efficiently controlled even if the user uses the remote controller having the limited button. Also, even if a touch screen provided in the electronic apparatus is used, since the virtual keypad image is changed such that the predicted key is positioned at the same region as a selected region or at a near distance according to a result of predicting the key to be input next according to the key input by the user, the convenience of the user may be achieved.

FIGS. 5A, 5B and 5C are diagrams illustrating a control operation using a virtual keypad according to an example embodiment.

FIGS. 5A, 5B and 5C illustrate a non-limiting example in which the virtual keypad image generated on the assumption that a user inputs numbers using 4 direction keys provided in a remote controller and an OK key located at the center of the 4 direction keys. The electronic apparatus may previously divide a plurality of numbers into a plurality of groups so as to be selectable by the direction keys and the OK key of the remote controller. For example, in FIGS. 5A, 5B and 5C, 1 to 4 are previously divided into a first group, 5 to 7 are previously divided into a second group, 8 to o and * are previously divided into a third group, and the plurality of numbers may be activated for each group according to a movement of a button object. Here, activation means that it may be selected by the direction keys and the OK key of the remote controller.

When the electronic apparatus receives a virtual keypad image generation command from the remote controller, a virtual keypad image 510 as shown in FIG. 5A may be generated. The electronic apparatus may generate the virtual keypad image 510 including a button object indicating a key that may be selected by using the 4 direction keys and the OK key of the remote controller in the leftmost of the virtual keypad object. The user may select 1, 2, 3, and 4 by using the 4 direction keys and the OK key. On the other hand, this is only an example. Upon reception of the virtual keypad image generation command from the remote controller, the electronic apparatus may generate the virtual keypad image shown in FIG. 5B or 5C based on the key input history information.

On the other hand, when the user operates a right direction key of the remote controller in a state in which the virtual keypad image 510 is displayed as shown in FIG. 5A, the electronic apparatus may generate a virtual keypad object 520 in which a button object 521 is moved to the right by one space as shown in FIG. 5B. The user may select 5, 6, and 7 using the 4 direction keys and the OK key.

When the user operates a left direction key of the remote controller, the electronic apparatus may generate the virtual keypad object 510 as shown in FIG. 5A. On the other hand, when the user operates the right direction key of the remote controller, the electronic apparatus may generate a virtual keypad object 530 in which a button object 531 is moved to the right by one space as shown in FIG. 5C. At this time, the user may select 8, 9, 0, and * using the 4 direction keys and the OK key.

Although the virtual keypad images 510, 520, and 530 of FIGS. 5A through 5C have been described to be generated according to an operation command input by the user above, the electronic apparatus may move the button object to include a key that is highly likely to be input next using the key input history information.

For example, when it is assumed that a number to be input by the user is '1691' and the virtual keypad image generation command is received from the remote controller, the electronic apparatus may generate the virtual keypad image 510 including the button object 511 that may select '1' based on the displayed screen and stored key input history information.

Here, when the user operates an upward direction key of the remote controller, the electronic apparatus may receive a control signal corresponding to an operation of the user and select '1' as the corresponding key, and predict the key to be input next based on the displayed screen and the stored key input history information. If the predicted key is '6', the electronic apparatus may generate the virtual keypad image 520 including the button object 521 that may select '6'.

When the user operates the OK key of the remote controller, the electronic apparatus may receive a control signal according to an operation of the user and select '6' as the corresponding key, and predict the key to be input next based on the displayed screen and the stored key input history information. If the predicted key is '9', the electronic apparatus may generate the virtual keypad image 530 including the button object 531 that may select '9'.

When the user operates the OK key of the remote controller, the electronic apparatus may receive a control signal according to an operation of the user and select '1' as the corresponding key, and predict the key to be input next based on the displayed screen and the stored key input history information. If the predicted key is '1', the electronic apparatus may generate the virtual keypad image 510 including the button object 511 that may select '1'.

On the other hand, when the user operates a lateral key of the remote controller, the electronic apparatus may receive a control signal according to an operation of the user and select '1' as the corresponding key, and predict the key to be input next based on the displayed screen and the stored key input history information. If the user operates an exit button provided on the remote controller, or operates a button corresponding to the exit key included on a virtual keypad, or if there is no button operation for a predetermined time, the electronic apparatus may display a screen with no virtual keypad image and may store previously input key input information.

On the other hand, if there is no key to be input by the user in the button object, the user may move the button object to select a key, and the electronic apparatus may learn all of these operations.

As described above, by activating the key to be input next based on the received screen and the key input history information, the inconvenience that the user has to move the button object to select a desired key may be reduced.

FIGS. 6 and 7 are diagrams illustrating various embodiments for changing a virtual keypad image based on a key prediction according to an example embodiment.

Referring to FIG. 6, the electronic apparatus may generate a virtual keypad image 610 in which a plurality of keys are rearranged in an area of a button object 611. The electronic apparatus may predict a key that is highly likely to be selected by a user based on a screen corresponding to a received image signal and key input history information, and move the button object 611 such that the predicted key is included. The electronic apparatus may rearrange a plurality of keys in the button object 611 such that a position of the key selected by the user is the same as a position of the predicted key.

Therefore, the various keys to be selected may be selected using the same button of the remote controller, thereby improving convenience of the user.

Referring to FIG. 7, the electronic apparatus may generate a virtual keypad image 710 in which a plurality of key arrangements constituting a virtual keypad object in which a button object 711 is located are wholly rearranged. The electronic apparatus may predict the key that is highly likely to be selected by the user based on the screen corresponding to the received image signal and the key input history information, and generate the virtual keypad image 710 in which the plurality of key arrangements constituting the virtual keypad object are wholly rearranged such that the predicted key is included in the button object 711. A position of the button object 711 on the virtual keypad object may be maintained. The electronic apparatus may arrange the key that is highly likely to be selected by the user to be located in the button object 711, and arrange the other keys from an area adjacent to the button object 711 in the order that is highly likely to be selected.

Therefore, various keys to be selected may be selected by using the same button of the remote controller, and the key may be selected by the minimum and/or reduced movement, thereby improving the convenience of the user.

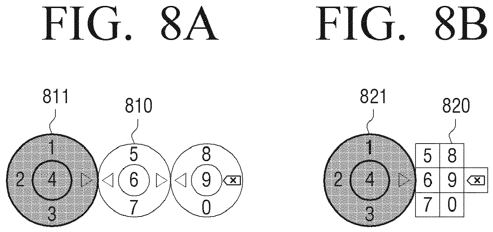

FIG. 8 is a diagram illustrating various forms of a virtual keypad image according to an example embodiment.

Although FIGS. 4A, 4B, 4C, 5A, 5B, 5C, 6 and 7 show the virtual keypad images in the case where the button object is in the form of a cross (+) character, when the directions key and the OK key provided in the remote controller are circular, as shown in FIG. 8A, the button object 811 may be circular and may reflect this to generate a virtual keypad image 810.

When a virtual keypad is used through operations of the 4 direction keys and the OK key, but not limited to a circular or cross shape, the electronic apparatus may also generate a virtual keypad image 820 including both circular and cross shapes as shown in FIG. 8B. Although FIG. 8B shows a button object 821 in a bar circular shape located on a virtual keypad object in a circular shape, when a button object is located on a virtual keypad object in a cross shape according to an operation of a user, a shape of the button object may be changed to the cross shape.

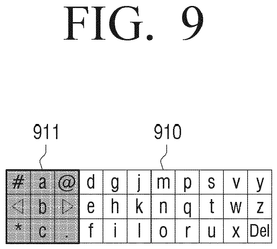

FIG. 9 is a diagram illustrating a virtual keypad image when number keys provided in a remote controller are operated according to an example embodiment.

Referring to FIG. 9, an electronic apparatus may generate a virtual keypad image 910 for inputting characters based on at least one of a screen corresponding to an image signal received from an external apparatus and key input history information. Since the number of keys of a virtual keypad object is large in the case of a character, number keys capable of selecting nine to twelve keys may be selected rather than direction keys capable of selecting five keys without moving a button object. In FIG. 9, it is assumed that a 3 x 3 number key set provided in the remote controller is used for convenience of explanation.

For example, the electronic apparatus may generate the virtual keypad image 910 including a virtual keypad object including English keys and a button object 911 indicating an area selectable on the virtual keypad object according to a screen recognition result corresponding to the received image signal. The button object 911 may be a rectangular shape that may be selected in the form of 3 X 3 on the virtual keypad object according to a shape of a number key set provided in the remote controller.

Although FIG. 9 shows that since the virtual keypad object has three rows, the button object 911 is movable only to the left and right, when actually implemented, the button object 911 may have four or more columns and moved up and down.

When the button object is implemented as a combination of shapes of the direction keys and number keys provided in the remote controller, a larger number of keys may be selected without moving the button object. For example, in general, since a remote controller has number keys below direction keys, a button object may be implemented as having an upper portion in the shape of direction keys such as a cross shape (or a circular shape) and a lower portion in the shape of number keys, but is not limited thereto. The shape of the button object may be implemented in various forms.

FIG. 10 is a diagram illustrating an example embodiment in which key input history information is collected. For example, FIG. 10 illustrates a case where an image signal received from an external apparatus is a typical TV screen, assuming that a channel number is 2 digits, and a user inputs a channel number '55' 300 times and a channel number '15' 200 times. For convenience of explanation, cumulative information corresponding to one key operation will be referred to as a module. For example, since a current channel number is 2 digits, a cumulative tree may be configured in the form of a 1-3 module. If the channel number is 3 digits, the cumulative tree of the current 1-3-module will be in the form of a 1-3-32 module. As described above, accumulating key input information in the form of a tree is intended not only to use the number of times of key inputs but also to consider a key input order.

On the other hand, when the electronic apparatus accumulates the key input history information in consideration of a type of a screen, the electronic apparatus may classify the entire key input history information for each type of the screen. The electronic apparatus may accumulate the key input history information according to the type of the screen at the time of collection. In this case, the cumulative tree may be generated by the number of types of screens.

Referring to FIG. 10, the electronic apparatus may receive key input information by dividing 10 numbers into three groups. This is because, as shown in FIG. 5, numbers that may be input using direction keys at one time are defined as a group.

The electronic apparatus may accumulate the key input history information in the form of the tree. For example, when the user first inputs '55', a count of a second group including the first input 5 may increase by 1, and the count of the second group including 5 in a module connected to the second group may also increase by 1.

When the user inputs '15', a count of a first group including the first input 1 may increase by 1, and the count of the second group including 5 in a module connected to the first group may also increase by 1.

Thus, if the user inputs the channel number '55' 300 times and '15' 200 times, the count of the first group of a first module may be 200, the count of the second group may be 300, the count of the second group of the module connected to the first group may be 200, and the count of the second group of the module connected to the second group may be 300.

On the other hand, when the electronic apparatus accumulates the key input history information by a predetermined number of times, the electronic apparatus may delete a module that the user does not use very well, thereby storing the key input history information in a simpler structure.

On the other hand, a method of collecting the key input history information shown in FIG. 10 is only an example embodiment, and the electronic apparatus may collect the history information using various criteria and methods.

As described above, the electronic apparatus may accumulate the key input history information, and when the user selects one key, predict a key that is highly likely to be selected next.

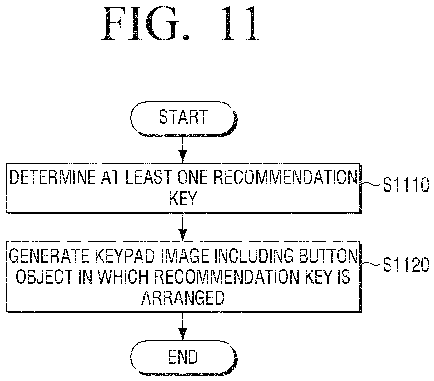

FIG. 11 is a flowchart illustrating an example control method of an electronic apparatus according to an example embodiment of the present disclosure.

Referring to FIG. 11, the electronic apparatus may determine at least one recommendation key (S1110). For example, the electronic apparatus may determine the at least one recommendation key in consideration of (based on) a screen corresponding to an image signal and key input history information. For example, the electronic apparatus may determine the at least one recommendation key using a type of the screen corresponding to the image signal and the history information that a user has input on the screen.

The electronic apparatus may generate a keypad image including a button object in which the recommendation key is arranged (S1120). The button object may be located in a partial area on the virtual keypad object, and may represent a plurality of key areas selectable by a plurality of buttons provided in a remote controller. For example, the button object may correspond to an arrangement type of the plurality of buttons provided in the remote controller. That is, the electronic apparatus may generate the keypad image including the button object in which the least one recommendation key is arranged in the form of the plurality of buttons that may be selected by the plurality of buttons provided in the remote controller.

Such a keypad image generation operation may be performed by the electronic apparatus when the user presses a predetermined key for displaying the virtual keypad image using the remote controller or performs an operation requiring input using a virtual keypad.

On the other hand, although not shown, the electronic apparatus may display the generated keypad image. For example, if a display is provided in the electronic apparatus, the electronic apparatus may display the generated keypad image through the provided display. On the other hand, if the display is not provided in the electronic apparatus, the electronic apparatus may transmit information about the generated keypad image to an external apparatus having the display to display the generated keypad image.

The electronic apparatus may receive a control signal from the remote controller. Here, the control signal received from the remote controller may be generated according to a button operation corresponding to a key that the user wishes to select by viewing the virtual keypad image.

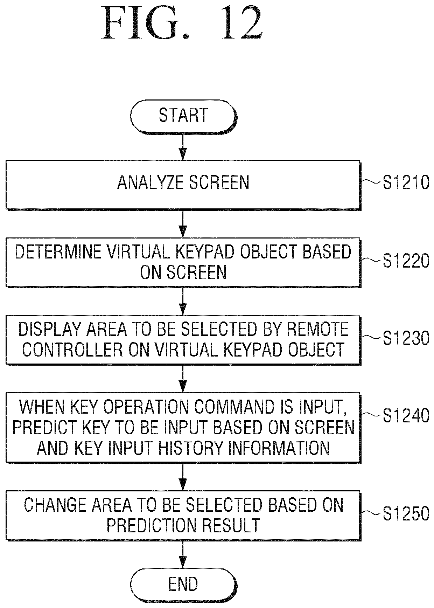

FIG. 12 is a flowchart illustrating an example control method of an electronic apparatus according to an example embodiment of the present disclosure.

Referring to FIG. 12, the electronic apparatus may analyze a screen corresponding to an image signal (S1210). For example, the electronic apparatus may determine whether a predetermined object is included in the screen. The electronic apparatus may determine a type of the screen according to the predetermined object detected in the screen.

The electronic apparatus may determine a virtual keypad object based on the screen (S1220). For example, the electronic apparatus may determine the virtual keypad object corresponding to the detected predetermined object among a plurality of virtual keypad objects. The virtual keypad object may, for example, and without limitation, include at least one of Korean, English, and numbers.

The electronic apparatus may then display an area to be selected by a remote controller on the virtual keypad object (S1230). The area to be selected by the remote controller may be referred to as a button object. For example, the electronic apparatus may display a button object area corresponding to a button shape provided in the remote controller on the virtual keypad object.

When a key operation command is input from the remote controller, the electronic apparatus may predict a key to be input next based on the screen and key input history information (S1240). For example, the electronic apparatus may predict the key to be input using the key input information input by the user according to the predetermined object detected on the screen. That is, the electronic apparatus may determine the type of the screen based on the predetermined object, and predict the key to be input based on the key input history information input on the determined type of screen.

The electronic apparatus may change the area to be selected based on a prediction result (S1250). Here, the changed area to be selected may be an object area. For example, the electronic apparatus may change a position of the button object to include the key predicted to be input next in the virtual keypad object, or rearrange a plurality of key areas of the virtual keypad object such that the key to be predicted is included in the button object.

As described above, by generating the virtual keypad image based on the screen corresponding to the received image signal and the key input history information of the user, even if the user uses the remote controller having limited buttons, control may be performed with minimum and/or reduced button operation, thereby improving the convenience of the user.

Meanwhile, the various example embodiments described above may be implemented in a recording medium which may be read by a computer or a similar apparatus using software, hardware, or any combination thereof. According to a hardware implementation, the example embodiments described in the present disclosure may be implemented, for example, and without limitation, using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, an electrical unit (e.g., circuitry) for performing other functions, or the like. In some cases, the example embodiments described herein may be implemented by a processor itself. According to a software implementation, embodiments such as the procedures and functions described herein may be implemented in separate software modules. Each of the software modules may perform one or more of the functions and operations described herein.

Meanwhile, the control method of the electronic apparatus according to the various example embodiments described above may be stored in a non-transitory computer-readable recording medium. The non-transitory computer-readable recording medium may be mounted and used in various apparatuses.

The non-transitory computer-readable recording medium is a medium that semi-permanently stores data and is readable by a device. Examples of the non-transitory computer-readable recording medium may include, for example, and without limitation, CD, DVD, hard disk, Blu-ray disk, USB, memory card, ROM, and the like.

Although the example embodiments of the present disclosure have been illustrated and described hereinabove, the present disclosure is not limited to the abovementioned specific example embodiments, but may be variously modified by those skilled in the art to which the present disclosure pertains without departing from the scope of the present invention as defined in the accompanying claims.

## Claims

1. An electronic apparatus comprising:
a communicator comprising communication circuitry configured to receive a control signal from a remote controller; and
a processor configured to determine at least one recommendation key based on a screen corresponding to an image signal and key input history information and to generate a keypad image comprising a button object in which the at least one recommendation key is arranged to be selectable by a plurality of buttons included in the remote controller.

2. The electronic apparatus as claimed in claim 1, wherein, in response to button information being received from the remote controller, the processor is further configured to identify a first key corresponding to the received button information, to identify a second key to be input after the first key, and to change the button object to include the second key.

3. The electronic apparatus as claimed in claim 2, wherein the processor is further configured to identify the second key using machine learning.

4. The electronic apparatus as claimed in claim 2, wherein the communicator is further configured to receive the image signal from an external apparatus, and
wherein the processor is further configured to identify a predetermined object on a screen corresponding to the received image signal, and to generate a keypad image including a virtual keypad object corresponding to the identified object from among a plurality of virtual keypad objects.

5. The electronic apparatus as claimed in claim 4, further comprising a memory configured to store key input history information,
wherein the processor is further configured to obtain the key input history information for each predetermined object, and to cause the key input history information obtained for each predetermined object to be stored in the memory.

6. The electronic apparatus as claimed in claim 4, wherein, in response to button information input in a remote controller being received from the remote controller, the processor is further configured to identify a second key to be input after the first key corresponding to the received button information, and to rearrange a plurality of key areas included in the virtual keypad object such that the second key is included in the button object.

7. The electronic apparatus as claimed in claim 6, wherein the processor is further configured to rearrange the plurality of key areas included in the virtual keypad object such that the second key is positioned at a same position as a position of the first key in the button object.

8. The electronic apparatus as claimed in claim 1, wherein the button object includes 4 direction keys and/or number keys provided in the remote controller.

9. The electronic apparatus as claimed in claim 1, further comprising a display configured to display the generated keypad image.

10. The electronic apparatus as claimed in claim 1, wherein the communicator is further configured to transmit the generated keypad image to an external display apparatus.

11. A control method of an electronic apparatus comprising:
determining at least one recommendation key based on a screen corresponding to an image signal and key input history information; and
generating a keypad image comprising a button object in which the at least one recommendation key is arranged to be selectable by a plurality of buttons included in a remote controller.

12. The control method as claimed in claim 11,
wherein, in response to button information being received from the remote controller, the determining includes identifying a first key corresponding to the received button information, and identifying a second key to be input after the first key, and
wherein the generating includes changing the button object to include the second key and generating a keypad image including the changed button object.

13. The control method as claimed in claim 12, wherein the determining includes identifying the second key using machine learning.

14. The control method as claimed in claim 12, further comprising receiving the image signal from an external apparatus, and
wherein the generating includes identifying a predetermined object on a screen corresponding to the received image signal, and generating a keypad image including a virtual keypad object corresponding to the identified object from among a plurality of virtual keypad objects.

15. The control method as claimed in claim 14,
wherein, in response to button information input in a remote controller being received from the remote controller, the determining includes identifying a second key to be input after the first key corresponding to the received button information, and
wherein the generating includes rearranging a plurality of key areas included in the virtual keypad object such that the second key is included in the button object.
